# EUROPEAN PATENT APPLICATION

(11) **EP 1 061 304 A1**
(43) Date of publication of application: **20.12.2000**
(21) Application number: 00111018.8
(22) Date of filing: 30.05.2000
(51) Int. Cl.: F16L 33/207, F16L 47/00

(54) **Joint for fluid conveyance piping**

(30) Priority: 02.06.1999 PT 10231199
(71) Applicant: Boulanger Consultadoria e Serviços LDA, Funchal - Madeira (PT)
(72) Inventor: Del Bue, Paolo, 6933 Muzzano (CH)
(74) Representative: Modiano, Guido, Dr.-Ing.

(57) **Abstract**

The joint for fluid conveyance piping is constituted by the interpenetrating coaxial insertion of two facing ends (2a, 3a) of pipe segments (2, 3) with interposed ratchet means (4) for retention and perimetric means (8) for clamping the interpenetrating ends (2a, 3a).

## Description

The present invention relates to an improved joint for fluid conveyance piping.

In the production and installation of piping for conveying fluids, for example gas for home and industrial use, water and others, extreme care must be placed in producing the joints, since these are the points most prone to problems and leaks.

In addition to this, there is the fact that distribution lines are composed of two materials: steel for the main pipes and polyethylene for the branch piping for the individual users.

The joints that connect the main pipes to the branch pipes for users must be very practical to connect and must also have proven mechanical resistance to the various possible stresses to which they can be subjected once installed, as well as of course assured hermetic tightness in any condition despite the mutually different mechanical characteristics of the materials used to produce them, i.e. as above-mentioned, steel and polyethylene.

Currently conventional joints are provided essentially by means of double-threaded sleeves (nipples) which join by screw coupling the facing ends of two pipes after applying a sealing material, for example hemp, Teflon or quick-setting fluid resin, to the threads.

As an alternative, conventional joints can also be provided by welding the facing ends of the pipes inside a reinforcement sleeve.

However, mainly due to the already-noted adoption of plastic materials in the provision of piping, conventional joints have revealed drawbacks which cause partial or, worse still, complete loss of their integrity, consequently causing leaks of the conveyed fluid.

In particular, coupling by screwing on threads has raised the worst problems when the joints thus provided are subjected to transverse tractions or stresses.

These stresses generally tend to strip the thread and the joint loses its monolithic characteristics, with severe damage if the joint is arranged inside walls or under floors and others.

In the case of welded joints, considerable work is required if the joint needs to be replaced because it is damaged.

Finally, conventional joints cannot be preassembled in the workshop and stored ready for use.

The aim of the present invention is to solve the above-cited problems of the prior art by providing an improved joint for fluid conveyance piping which ensures maximum tightness even when joining pipes composed of two materials of different kinds and if subjected to considerable stresses, be they axial traction or transverse thrust stresses.

An object of the present invention is to provide an improved joint for fluid conveyance piping which is simple and quick to preassemble even in the workshop before use and can be easily used or repaired if necessary.

This aim, this object and others are achieved by an improved joint for fluid conveyance piping, characterized in that it is constituted by the interpenetrating coaxial insertion of two facing ends of pipe segments made of different materials, with interposed ratchet means for mutual retention and perimetric means for clamping these interpenetrating ends.

Further characteristics and advantages will be readily apparent from the following detailed description of a preferred embodiment of an improved joint for fluid conveyance piping, illustrated only by way of non-limitative example in the accompanying drawings, wherein:

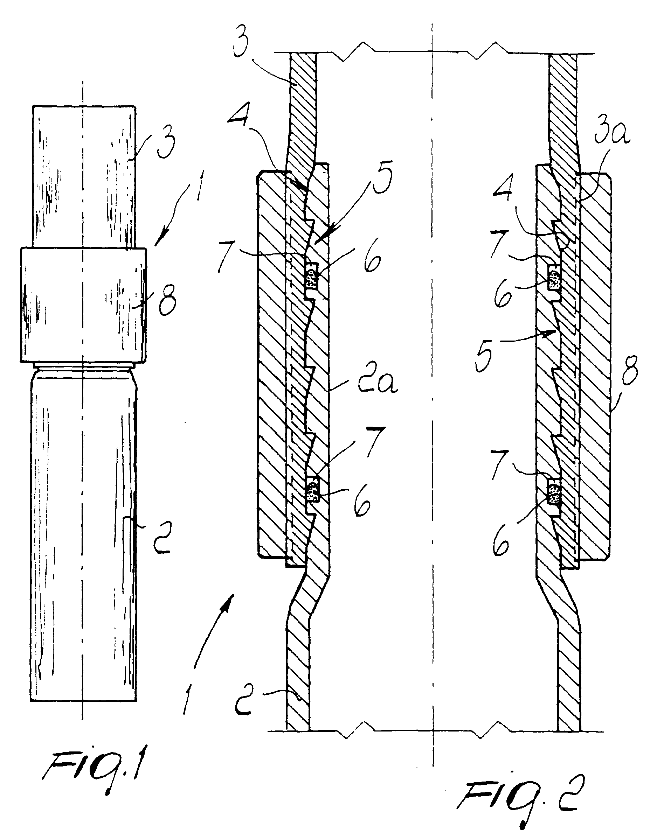

Figure 1 is a general view of the joint according to the invention;
Figure 2 is an enlarged-scale longitudinal sectional view of the joint, according to the invention.

With reference to the above figures, 1 generally designates an improved joint for fluid conveyance piping which is constituted by the interpenetrating coaxial insertion of two facing ends 2a and 3a of segments of pipes 2 and 3, the segment 2 being made of steel and the segment 3 being made of polyethylene.

Ratchet means for mutual retention are interposed between the ends 2a and 3a and means, described in greater detail hereinafter, for clamping the interpenetrating ends are arranged perimetrically.

The ratchet means are constituted by an orientated set of teeth 4 which is formed peripherally on the outside of the end 2a of the steel pipe 2 and can engage a corresponding complementary set of teeth 5 which is formed on the inside of the other facing end 3a of the polyethylene pipe 3.

Elastic hermetic sealing means are interposed between the sets of teeth 2a and 3a and are essentially constituted by a series of gaskets 6 of the type known as O-ring; these means are accommodated in corresponding seats 7 formed in one of the ends, the end 2a in the illustrated solution, between contiguous teeth of the sets of teeth.

Said perimetric clamping means are constituted by a clamping ring 8 which can be pressed perimetrically and externally onto the correspondingly outer end 3a that constitutes the improved joint 1.

The ends 2a and 3a that constitute the joint are shaped respectively so that the end 3a forms a female mouth having a larger diameter and the end 2a forms a male mouth whose diameter is smaller, by a specific extent, than the diameter of said female mouth 3a.

The assembly of the invention can be easily deduced from the above description: the metallic male mouth 2a is inserted in the polymeric female mouth 3a and the sets of teeth 4 and 5 mutually and stably engage, since the teeth that compose them are orientated so as to prevent the disengagement movement.

The O-rings 6 ensure tightness between the ends 2a and 3a and in order to complete the improved joint 1 the clamping ring 8 is arranged on the end 3a and, by using an appropriate press, is tightened radially with a centripetal force, making the joint 1 monolithic and extremely resistant even in the presence of intense stresses.

The joint 1, owing to its intrinsic characteristics, can also be preassembled in the workshop with segments of pipe 2 and 3 whose characteristics are identical to those of pipes for conventional conveyance of fluids to users, to which it can be applied by conventional welding.

It has thus been observed that the above-described invention achieves the intended aim and object.

The invention thus conceived is susceptible of modifications and variations, all of which are within the scope of the appended claims.

All the details may further be replaced with other technically equivalent elements.

In the practical embodiment of the invention, the materials employed, as well as the shapes and the dimensions, may be any according to requirements without thereby abandoning the scope of the protection of the appended claims.

The disclosures in Portoguese Patent Application No. 102311 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A joint for fluid conveyance piping, characterized in that it is constituted by the interpenetrating coaxial insertion of two facing ends (2a, 3a) of pipe segments (2, 3) made of different materials, with interposed ratchet means (4, 5) for mutual retention and perimetric means (8) for clamping said interpenetrating ends (2a, 3a).

2. The joint according to claim 1, characterized in that said ratchet means are constituted by an orientated set of teeth (4) which is formed in the peripheral region on the outside of one of said ends (3a) and can engage a corresponding complementary set of teeth (5) formed on the inside of the facing end (2a).

3. The joint according to claims 1 and 2, characterized in that elastic hermetic sealing means (6) are interposed between said sets of teeth (4,5).

4. The joint according to claim 3, characterized in that said elastic hermetic sealing means are constituted by a series of gaskets (6) of the type known as O-ring, which can be accommodated in corresponding seats (7) formed in one of said ends (2a, 3a) between contiguous teeth of the sets of teeth (4, 5).

5. The joint according to the preceding claims, characterized in that said perimetric clamping means are constituted by a ring (8) which can be pressed with a radial-centripetal force and is perimetrically external on the corresponding outer end (3a) that constitutes the coupling.

6. The joint according to claim 1, characterized in that said ends (2a, 3a) that constitute the joint (1) are shaped so as to form a female mouth which has a larger diameter and is made of polymeric material and a male mouth which is made of metallic material and has a diameter which is smaller, by a specific extent, than the diameter of said female mouth.
